# EUROPÄISCHE PATENTSCHRIFT

(11) **EP 3 447 378 B1**
(45) Veröffentlichungstag und Bekanntmachung des Hinweises auf die Patenterteilung: **07.10.2020**
(21) Anmeldenummer: 18187972.7
(22) Anmeldetag: 08.08.2018
(51) Int. Cl.: F23M 5/08, B60H 1/22, F24H 9/02

(54) **FAHRZEUGHEIZGERÄT**
VEHICLE HEATING DEVICE
APPAREIL CHAUFFANT POUR VÉHICULE

(30) Priorität: 21.08.2017 DE 102017119077
(43) Veröffentlichungstag der Anmeldung: 27.02.2019
(73) Patentinhaber: Eberspächer Climate Control Systems GmbH, 73730 Esslingen (DE)
(72) Erfinder: Schlör, Christof, 73669 Lichtenwald (DE)
(74) Vertreter: Ruttensperger Lachnit Trossin Gomoll

(56) Entgegenhaltungen:
- EP-A2- 0 287 923
- DE-C1- 4 311 080
- DE-U1- 9 320 375

## Beschreibung

Die vorliegende Erfindung betrifft ein Fahrzeugheizgerät, welches in einem Fahrzeug als Standheizung oder/und Zuheizer dazu eingesetzt werden kann, Systembereiche des Fahrzeugs vor Inbetriebnahme oder während des Betriebs thermisch zu konditionieren.

Aus der DE 197 34 814 C1 ist ein in Fig. 2 dargestelltes brennstoffbetriebenes Fahrzeugheizgerät 10 zur Erwärmung von in einen Fahrzeuginnenraum einzuleitender Luft bekannt. Dieses Fahrzeugheizgerät 10 umfasst einen Wärmetauscherbereich 11 mit einem Wärmetauschergehäuse 12 mit einem in Richtung einer Gehäuselängsachse L langgestreckten Umfangswandungsbereich 14. Ein von dem Umfangswandungsbereich 14 umgebener Gehäuseinnenraum 16 ist in Richtung der Gehäuselängsachse L von einem an den Umfangswandungsbereich 14 anschließenden Bodenwandungsbereich 18 axial abgeschlossen. An einer dem Gehäuseinnenraum 16 zugewandten Innenseite 20 des Wärmetauschergehäuses 12 sind bis in den Bodenwandungsbereich 18 sich fortsetzende erste Wärmeübertragungsrippen 22 vorgesehen. An einer von dem Gehäuseinnenraum 16 abgewandten Außenseite 24 des Wärmetauschergehäuses 12 sind ebenfalls bis in den Bodenwandungsbereich 18 sich fortsetzende zweite Wärmeübertragungsrippen 26 vorgesehen.

An einem ebenfalls an den Umfangswandungsbereich 14 axial anschließenden Verbrennungsbaugruppenträgerbereich 28 ist eine Brennkammerbaugruppe 30 mit einem Brennkammergehäuse 32 und einem Flammrohr 34 getragen. In an einem Bodenbereich des Brennkammergehäuses 32 vorgesehenes poröses Verdampfermedium 36 wird über eine Brennstoffzuführleitung 38 flüssiger Brennstoff eingespeist. Die zur Verbrennung erforderliche Luft wird durch ein Verbrennungsluftgebläse 40, hier ausgebildet als Seitenkanalgebläse, in Richtung zum Brennkammergehäuse 32 gefördert. Das Verbrennungsluftgebläse 40 ist ebenfalls am Verbrennungsbaugruppenträgerbereich 28 des Wärmetauschergehäuses 12 getragen. Das Verbrennungsluftgebläse 40 umfasst einen Elektromotor 42, welcher sowohl ein zum Fördern der Verbrennungsluft dienendes Förderrad 43, als auch ein zum Fördern der zu erwärmenden Luft dienendes Förderrad 44 antreibt.

Ein Heizgerätegehäuse 46 umgrenzt den von der zu erwärmenden Luft zu durchströmenden Luftströmungsraum 47 und weist nahe dem Förderrad 44 in einem Eintrittsbereich 49 eine Heizlufteintrittsöffnung 48 auf. Die durch das Förderrad 44 geförderte Luft strömt entlang des Heizgerätegehäuses 46 in Richtung zum Wärmetauschergehäuse 12 und umströmt die zweiten Wärmeübertragungsrippen 26, bevor sie an einer dem Bodenwandungsbereich 18 nahe liegenden Heizluftaustrittsöffnung 50 eines Austrittsbereichs 51 aus dem Außengehäuse 46 austritt.

Das Heizgerätegehäuse 46 umfasst eine Gehäuseumfangswandung 56 mit beispielsweise im Wesentlichen rechteckigem Querschnitt und bezüglich der Gehäuselängsachse L im Wesentlichen zylindrischer Struktur. An dem dem Austrittsbereich 51 naheliegenden Ende der Gehäuseumfangswandung 56 schließt ein allgemein mit 58 bezeichneter Austritts-Stirnwandungsbereich an. Der Austritts-Wandungsbereich 58 umfasst einen konisch sich verjüngenden Bereich 60, der radial außen in einem krümmungsartigen Übegangsbereich an die Gehäuseumfangswandung 56 anschließt und radial innen in einem Übergangsbereich an einen im Wesentlichen zylindrischen, beispielsweise mit kreisrunder Struktur ausgebildeten Gehäuseaustrittsabschnitt 62 anschließt. In diesem Gehäuseaustrittsabschnitt 62 ist die Heizluftaustrittsöffnung 50 des Austrittsbereich 51 ausgebildet.

Die durch das Verbrennungsluftgebläse 40 in das Brennkammergehäuse 32 geförderte Verbrennungsluft wird dort mit aus dem porösen Verdampfermedium 36 abgedampftem Brennstoff verbrannt. Die Verbrennungsabgase strömen entlang des Flammrohrs 34 und gelangen in den Innenraum 16. Dort strömen die Verbrennungsabgase entlang der ersten Wärmeübertragungsrippen 22 zurück in Richtung zu einer in einem Abgasstutzen 52 gebildeten Abgasauslassöffnung 54.

Die an der Außenseite 24 des Wärmetauschergehäuses 12 vorgesehenen Wärmeübertragungsrippen 26, also die zweiten Wärmeübertragungsrippen 26, weisen radial außen jeweils eine im Wesentlichen in Richtung der Gehäuselängsachse L sich erstreckende und zur Gehäuseumfangswandung 56 einen im Wesentlichen konstanten Abstand aufweisende Längskante 64 auf. In dem dem Austrittsbereich 51 nahe liegenden Bereich geht die Längskante 64 in eine Radialkante 66 über. In einem ersten Radialkantenbereich 68 schließt die Radialkante 66 an die Längskante 64 an. Radial innen schließt an den ersten Radialkantenbereich 68 ein zweiter Radialkantenbereich 70 an, der zur Gehäuselängsachse L im Wesentlichen orthogonal orientiert ist und in axialer Richtung der Heizluftaustrittsöffnung 50 gegenüberliegt. Der erste Radialkantenbereich 68 erstreckt sich im Wesentlichen parallel zu dem konisch sich verjüngend in Bereich 60 des Austritts-Stirnwandungsbereichs 58.

Ein Fahrzeugheizgerät gemäß dem Oberbegriff des Anspruchs 1 ist aus der EP 0 287 923 A2 bekannt.

Es ist die Aufgabe der vorliegenden Erfindung, ein Fahrzeugheizgerät mit verbesserten Wärmeübertragungsvermögen bereitzustellen.

Erfindungsgemäß wird diese Aufgabe gelöst durch ein Fahrzeugheizgerät gemäß Anspruch 1. Dieses umfasst:
- ein Heizgerätegehäuse, wobei das Heizgerätegehäuse einen Luftströmungsraum für zu erwärmende Luft begrenzt und einen Eintrittsbereich zum Eintritt von Luft in den Luftströmungsraum und einen Austrittsbereich zum Austritt von Luft aus dem Luftströmungsraum aufweist,
- in dem Heizgerätegehäuse, eine mit Verbrennungsluft und Brennstoff zu speisende Brennerkammerbaugruppe,
- einen Wärmetauscherbereich mit einem in Richtung einer Gehäuselängsachse langgestreckten und an einer Außenseite von im Luftströmungsraum strömender Luft umströmbaren Wärmetauschergehäuse, wobei an der Außenseite des Wärmetauschergehäuses Wärmeübertragungsrippen vorgesehen sind,
wobei das Heizgerätegehäuse eine Gehäuseumfangswandung und einen an die Gehäuseumfangswandung anschließenden Austritts-Stirnwandungsbereich aufweist, wobei die Wärmeübertragungsrippen eine entlang der Gehäuseumfangwandung sich erstreckende Längskante und eine entlang des Austritts-Stirnwandungsbereichs sich erstreckende Radialkante aufweisen, wobei bei wenigstens einer Wärmeübertragungsrippe ein Abstand der Radialkante von dem Austritts-Stirnwandungsbereich von radial außen nach radial innen sich wenigstens bereichsweise ändert, vorzugsweise zunimmt.

Der Austritts-Stirnwandungsbereich ist wenigstens bereichsweise sich konisch verjüngend ausgebildet, und der Abstand der Radialkante vom Austritts-Stirnwandungsbereich nimmt wenigstens in dem entlang des sich konisch verjüngenden Bereichs des Austritts-Stirnwandungsbereichs sich erstreckenden Abschnitt der Radialkante zu.

Bei der wenigstens einen, vorzugsweise jeder Wärmeübertragungsrippe weist die Radialkante einen radial außen an die Längskante anschließenden ersten Radialkantenbereich und einen radial innen an den ersten Radialkantenbereich anschließenden und zur Gehäuselängsachse im Wesentlichen orthogonal orientierten zweiten Radialkantenbereich auf, und der Abstand der Radialkante zum Außen-Stirnwandungsbereich nimmt im ersten Radialkantenbereich zu.

Um insbesondere in demjenigen Bereich, in welchem die zu erwärmende Luft im Wesentlichen in Richtung der Gehäuselängsachse entlang der Wärmeübertragungsrippen durch den Luftströmungsraum strömt, für eine gleichmäßige Luftströmung zu sorgen, ist die Gehäuseumfangswandung wenigstens in ihrem das Wärmetauschergehäuse umgebenden Bereich im Wesentlichen zylindrisch ausgebildet, und die Längskante der wenigstens einen Wärmeübertragungsrippe, vorzugsweise aller Wärmeübertragungsrippen, weist in Richtung der Gehäuselängsachse einen im Wesentlichen konstanten Abstand zur Gehäuseumfangswandung auf.

Durch die divergierende Ausgestaltung der Radialkante bezüglich des Austritts-Stirnwandungsbereichs wird im axialen Endbereich des Wärmetauscherbereichs ein ungleichmäßiger Druckverlust der im Luftströmungsraum strömenden Luft erzeugt. Dies zwingt einen größeren Teil dieser Luft in Kontakt mit dem Wärmetauschergehäuse und somit zu einer verstärkten Wärmeübertragungswechselwirkung zwischen dieser Luft und dem Wärmetauschergehäuse, insbesondere in einem axialen Endbereich des Wärmetauschergehäuses, das, anschließend an einen näherungsweise zylindrisch geformten Umfangswandungsbereich, einen beispielsweise kalottenartig geformten Bodenwandungsbereich aufweisen kann.

Um den vorangehend beschriebenen Effekt möglichst effizient zu gestalten, wird vorgeschlagen, dass bei allen Wärmeübertragungsrippen der Abstand der Radialkante von dem Austritts-Stirnwandungsbereich von radial außen nach radial innen wenigstens bereichsweise zunimmt.

Beispielsweise kann der Aufbau derart sein, dass der sich konisch verjüngende Bereich des Austritts-Stirnwandungsbereichs radial außen an die Gehäuseumfangswandung anschließt und radial innen an einen eine Austrittsöffnung des Austrittsbereichs bereitstellenden, vorzugsweise im Wesentlichen zylindrischen Gehäuseaustrittsabschnitt anschließt, wobei vorzugsweise in dem Bereich mit zunehmendem Abstand zum Austritts-Stirnwandungsbereich die Radialkante sich im Wesentlichen geradlinig erstreckt.

Für eine einerseits hinsichtlich des erforderlichen Bauraums, andererseits für den angestrebten ungleichmäßigen Druckverlust vorteilhafte Ausgestaltung wird vorgeschlagen, dass in dem Bereich mit variierendem, vorzugsweise zunehmendem Abstand zum Austritts-Stirnwandungsbereich die Radialkante bezüglich des Austritts-Stirnwandungsbereichs einen Winkel im Bereich von 5° bis 15°, vorzugsweise etwa 10°, aufweist.

Ferner kann das erfindungsgemäße Fahrzeugheizgerät derart aufgebaut sein, dass der zweite Radialkantenbereich in Richtung der Gehäuselängsachse dem Austrittsbereich axial gegenüberliegt.

Ferner ist es vorteilhaft, wenn die Wärmeübertragungsrippen sich im Wesentlichen geradlinig in Richtung der Gehäuselängsachse erstrecken.

Die vorliegende Erfindung wird nachfolgend mit Bezug auf die beiliegenden Figuren detailliert beschrieben. Es zeigt:
- Fig. 1: ein erfindungsgemäß aufgebautes Fahrzeugheizgerät teilweise im Schnitt und vereinfacht dargestellt;
- Fig. 2: ein aus dem Stand der Technik bekanntes Fahrzeugheizgerät im Längsschnitt.

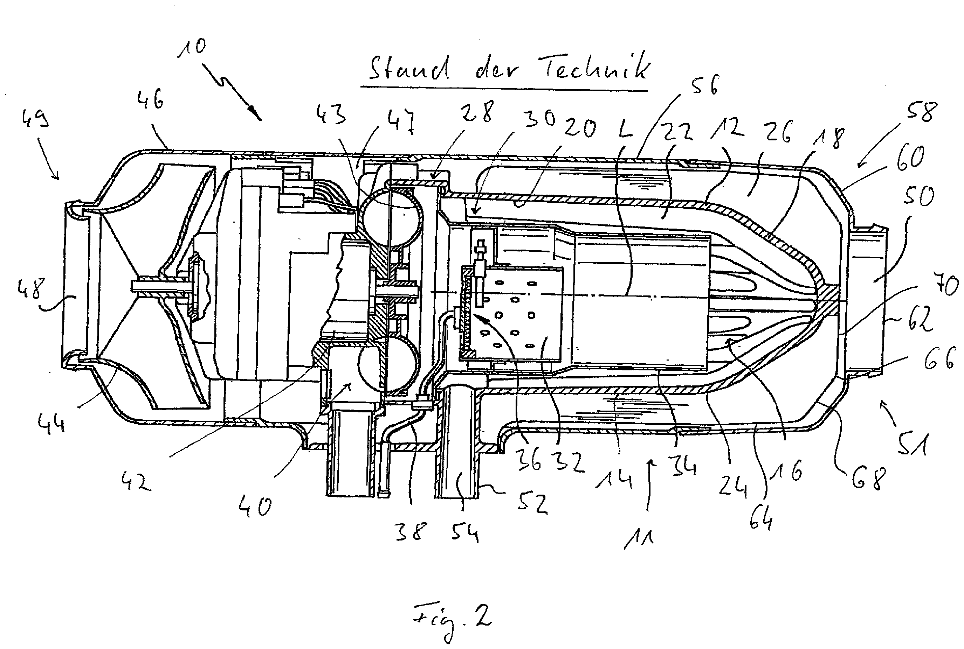

Bevor im Folgenden auf die erfindungsgemäße Ausgestaltung eines brennstoffbetriebenen Fahrzeugheizgerät detailliert erläutert wird, ist darauf hinzuweisen, dass der grundsätzliche Aufbau eines derartigen Fahrzeugheizgeräts so sein kann, wie vorangehend mit Bezug auf die Fig. 2 beschrieben. Dies betrifft insbesondere auch die Ausgestaltung der Brennkammerbaugruppe bzw. des Gebläses, welches sowohl zum Fördern der Verbrennungsluft, als auch zum Fördern der Heizluft eingesetzt wird.

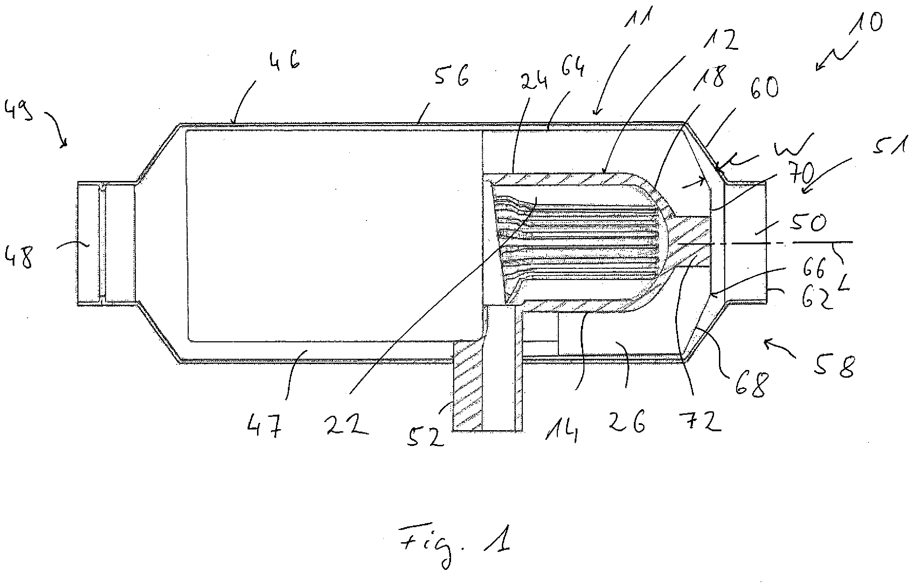

In Fig. 1 ist das Wärmetauschergehäuse 12 des Wärmetauscherbereichs 11 im Längsschnitt dargestellt. Zu erkennen sind die an der Innenseite 20 des Umfangswandungsbereichs 14 ausgebildeten, und in Richtung der Gehäuselängsachse L sich erstreckenden ersten Wärmeübertragungsrippen 22. Ferner sind zu erkennen die an der Außenseite 24 des Wärmetauschergehäuses 12 sich erstreckenden zweiten Wärmeübertragungsrippen 26. Diese sind in Richtung der Gehäuselängsachse L langgestreckt bzw. erstrecken sich in dieser Richtung, so dass die den Luftströmungsraum 47 vom Eintrittsbereich 49 zum Austrittsbereich 51 durchströmende Luft im Wesentlichen geradlinig und ohne seitliche Umlenkung entlang der zweiten Wärmeübertragungsrippen 26 strömen kann. Die Längskanten 64 der zweiten Wärmeübertragungsrippen 26 erstrecken sich vorzugsweise mit im Wesentlichen gleichmäßigem Abstand in Richtung der Gehäuselängsachse L entlang der Gehäuseumfangswandung 56.

Deutlich zu erkennen ist in Fig. 2, dass der an die Längskanten 64 anschließende erste Radialkantenbereich 68 der Radialkanten 66 bezüglich des Austritts-Stirnwandungsbereichs 58, insbesondere des konisch sich verjüngenden Bereichs 60 desselben sich unter einem Winkel W im Bereich von etwa 10° angestellt erstreckt, so dass der Abstand zwischen dem ersten Radialkantenbereich 68 zum konisch sich verjüngenden Bereich 60 des Austritts-Stirnwandungsbereichs 58 von radial außen nach radial innen zunimmt. Der erste Radialkantenbereich 68 hat zum konisch sich verjüngenden Bereich 60 des Austritts-Stirnwandungsbereichs 58 dort den minimalen Abstand, wo der erste Radialkantenbereich 68 an den zugehörigen Längskantenbereich 64 anschließt, und hat dort den maximalen Abstand zum Austritts-Stirnwandungsbereich 58 bzw. zum konisch sich verjüngenden Bereich 60 desselben, wo der im Wesentlichen zylindrisch geformte Gehäuseaustrittsabschnitt 62 an den konisch sich verjüngenden Bereich 60 Austritts-Stirnwandungsbereichs 58 anschließt. Der im radial inneren Bereich an den ersten Radialkantenbereich 68 jeweils anschließende zweite Radialkantenbereich 70 liegt radial innerhalb des konisch sich erstreckenden Bereichs 60 des Austritts-Stirnwandungsbereichs 58 der Heizluftaustrittsöffnung 50 axial gegenüber.

Die vorangehend beschriebene Ausgestaltung ist vorzugsweise bei allen zweiten Wärmeübertragungsrippen 26 gewählt, die insbesondere in dem dem Austritts-Stirnwandungsbereich 58 nahe gelegenen axialen Endbereich derselben gleich geformt und gleich dimensioniert sind, so dass insbesondere auch die ersten Radialkantenbereiche 68 eine gemeinsame diese umhüllende, konische Fläche definieren.

Mit dieser Ausgestaltung des axialen Endbereichs des Wärmetauschergehäuses 12 wird ein ungleichmäßiger Druckverlust der den Luftströmungsraum 47 durchströmenden Luft erzeugt, was dazu führt, dass diese verstärkt in Kontakt mit dem Wärmetauschergehäuse 12, insbesondere dem im Wesentlichen mit der Form einer Kugelkalotte ausgebildeten Bodenwandungsbereich 18 desselben gezwungen wird, um dort verstärkt Wärme von den entlang der Innenseite 20 strömenden Verbrennungsabgasen aufzunehmen. Somit wird gewährleistet, dass ein größerer Teil der in den Verbrennungsabgasen transportierten Wärme auf die das Heizgerätegehäuse 46 durchströmende Luft übertragen werden kann.

Es sei abschließend darauf hingewiesen, dass selbstverständlich die vorangehend mit Bezug auf die Fig. 3 detailliert beschriebene erfindungsgemäße Ausgestaltungform des Wärmetauschergehäuses 12 in verschiedenster Weise variiert werden kann. So kann beispielsweise bei den zweiten Wärmeübertragungsrippen der Übergang von den Längskanten 64 zu den Radialkanten 66 abgerundet ausgestaltet sein, ebenso wie der Übergang vom jeweiligen ersten Radialkantenbereich 68 zum jeweiligen zweiten Radialkantenbereich 70. Auch kann bei dem beispielsweise aus Kunststoffmaterial, vorzugsweise mit mehreren Teilen aufgebauten Heizgerätegehäuse 46 der Übergang von der Gehäuseumfangswandung 56 zu dem Austritts-Stirnwandungsbereich 58 gleichermaßen, insbesondere in Anpassung an den bei den zweiten Wärmeübertragungsrippen 26 gebildeten Übergang, abgerundet ausgebildet sein. Der an den Bodenwandungsbereich 58 anschließende und die Luftströmung auch in axialer Richtung umlenkende, zur Gehäuselängsachse L vorzugsweise im Wesentlichen zentrische Ansatz 72, welcher vorzugsweise axial bündig mit den jeweiligen zweiten Radialkantenbereichen 70 der zweiten Wärmeübertragungsrippen 26 endet, kann in axialer Richtung und in radialer Richtung anders dimensioniert ausgestaltet sein. Grundsätzlich könnten die Radialkanten 66, insbesondere die ersten Radialkantenbereiche 68 derselben, bezüglich des Austritts-Stirnwandungsbereichs 58, insbesondere des konischen Bereichs 60 desselben, auch entgegengesetzt zu der in Fig. 1 dargestellten Anstellung geneigt sein, so dass von radial außen nach radial innen der Abstand abnimmt.

Auch im Bereich der der Verbrennung dienenden und in Fig. 1 nicht dargestellten Systembereiche sowie der der Luftförderung dienenden Systembereiche kann das Fahrzeugheizgerät 10 anders ausgebildet sein, als in Fig. 2 dargestellt, ohne von der vorliegenden Erfindung wie in den Ansprüchen definiert abzuweichen.

## Patentansprüche

1. Fahrzeugheizgerät, umfassend:
- ein Heizgerätegehäuse (46), wobei das Heizgerätegehäuse (46) einen Luftströmungsraum (47) für zu erwärmende Luft begrenzt und einen Eintrittsbereich (49) zum Eintritt von Luft in den Luftströmungsraum (47) und einen Austrittsbereich (51) zum Austritt von Luft aus dem Luftströmungsraum (47) aufweist,
- in dem Heizgerätegehäuse (46), eine mit Verbrennungsluft und Brennstoff zu speisende Brennerkammerbaugruppe (30),
- einen Wärmetauscherbereich (11) mit einem in Richtung einer Gehäuselängsachse (L) langgestreckten und an einer Außenseite (24) von im Luftströmungsraum (47) strömender Luft umströmbaren Wärmetauschergehäuse (12), wobei an der Außenseite (24) des Wärmetauschergehäuses (12) Wärmeübertragungsrippen (26) vorgesehen sind,
wobei das Heizgerätegehäuse (46) eine Gehäuseumfangswandung (56) und einen an die Gehäuseumfangswandung (56) anschließenden Austritts-Stirnwandungsbereich (58) aufweist, wobei die Gehäuseumfangswandung (56) wenigstens in einem das Wärmetauschergehäuse (12) umgebenden Bereich im Wesentlichen zylindrisch ausgebildet ist und der Austritts-Stirnwandungsbereich (58) wenigstens bereichsweise sich konisch verjüngend ausgebildet ist, wobei die Wärmeübertragungsrippen (26) eine entlang der Gehäuseumfangwandung (56) sich erstreckende Längskante (64) und eine entlang des Austritts-Stirnwandungsbereichs (58) sich erstreckende Radialkante (66) aufweisen, wobei bei wenigstens einer Wärmeübertragungsrippe (26) die Radialkante (66) einen radial außen an die Längskante (64) anschließenden ersten Radialkantenbereich (68) und einen radial innen an den ersten Radialkantenbereich (68) anschließenden und zur Gehäuselängsachse (L) im Wesentlichen orthogonal orientierten zweiten Radialkantenbereich (70) aufweist und ein Abstand der Radialkante (66) von dem Austritts-Stirnwandungsbereich (58) von radial außen nach radial innen sich wenigstens bereichsweise ändert, **dadurch gekennzeichnet, dass** bei der wenigstens einen Wärmeübertragungsrippe (26) der Abstand der Radialkante (66) vom Austritts-Stirnwandungsbereich (58) im ersten Radialkantenbereich (68) wenigstens in dem entlang des sich konisch verjüngenden Bereichs (60) des Austritts-Stirnwandungsbereichs (58) sich erstreckenden Abschnitt in Strömungsrichtung zunimmt und die Längskante (64) in Richtung der Gehäuselängsachse (L) einen im Wesentlichen konstanten Abstand zur Gehäuseumfangswandung (56) aufweist.

2. Fahrzeugheizgerät nach Anspruch 1, **dadurch gekennzeichnet, dass** bei allen Wärmeübertragungsrippen (26) der Abstand der Radialkante (66) von dem Austritts-Stirnwandungsbereich (58) von radial außen nach radial innen wenigstens bereichsweise variiert, vorzugsweise zunimmt.

3. Fahrzeugheizgerät nach Anspruch 1 oder 2, **dadurch gekennzeichnet, dass** der sich konisch verjüngende Bereich (60) des Austritts-Stirnwandungsbereichs (58) radial außen an die Gehäuseumfangswandung (56) anschließt und radial innen an einen eine Austrittsöffnung (50) des Austrittsbereichs (51) bereitstellenden, vorzugsweise im Wesentlichen zylindrischen Gehäuseaustrittsabschnitt (62) anschließt.

4. Fahrzeugheizgerät nach einem der vorangehenden Ansprüche, **dadurch gekennzeichnet, dass** in dem Bereich mit zunehmendem Abstand zum Austritts-Stirnwandungsbereich (58) die Radialkante (66) sich im Wesentlichen geradlinig erstreckt.

5. Fahrzeugheizgerät nach einem der vorangehenden Ansprüche, **dadurch gekennzeichnet, dass** in dem Bereich mit zunehmendem Abstand zum Austritts-Stirnwandungsbereich (58) die Radialkante (66) bezüglich des Austritts-Stirnwandungsbereichs (58) einen Winkel im Bereich von 5° bis 15°, vorzugsweise etwa 10°, aufweist.

6. Fahrzeugheizgerät nach einem der vorangehenden Ansprüche, **dadurch gekennzeichnet, dass** der zweite Radialkantenbereich (70) in Richtung der Gehäuselängsachse (L) dem Austrittsbereich (51) axial gegenüberliegt.

7. Fahrzeugheizgerät nach einem der vorangehenden Ansprüche, **dadurch gekennzeichnet, dass** die Längskanten (64) aller Wärmeübertragungsrippen (26), in Richtung der Gehäuselängsachse (L) einen im Wesentlichen konstanten Abstand zur Gehäuseumfangswandung (56) aufweisen.

8. Fahrzeugheizgerät nach einem der vorangehenden Ansprüche, **dadurch gekennzeichnet, dass** die Wärmeübertragungsrippen (26) sich im Wesentlichen geradlinig in Richtung der Gehäuselängsachse (L) erstrecken.

9. Fahrzeugheizgerät nach einem der vorangehenden Ansprüche, **dadurch gekennzeichnet, dass** das Wärmetauschergehäuse (12) einen im Wesentlichen in Richtung der Gehäuselängsachse (L) sich erstreckenden, vorzugsweise im Wesentlichen zylindrisch gestalteten Umfangswandungsbereich (14) und einen an den Umfangswandungsbereich (14) anschließenden, vorzugsweise im Wesentlichen kalottenartig geformten Bodenwandungsbereich (18) aufweist.

## Claims

1. Vehicle heating device, comprising:
- a heating device housing (46), wherein the heating device housing (46) defines an air flow space (47) for air to be heated and has an inlet area (49) for the inlet of air into the air flow space (47) and an outlet area (51) for the outlet of air from the air flow space (47),
- a burner chamber assembly unit (30) to be fed with combustion air and fuel in the heating device housing (46),
- a heat exchanger area (11) with a heat exchanger housing (12), which is elongated in the direction of a housing longitudinal axis (L) and around which air flowing in the air flow space (47) can flow on an outer side (24), wherein heat transfer ribs (26) are provided on the outer side (24) of the heat exchanger housing (12),
wherein the heating device housing (46) has a housing circumferential wall (56) and an outlet front wall area (58) adjacent to the housing circumferential wall (56), wherein the housing circumferential wall (56) is at least in an area surrounding the heat exchanger housing (12) formed essentially cylindrical and the outlet front wall area (58) is formed conically tapering at least in some areas, wherein the heat transfer ribs (26) have a longitudinal edge (64) extending along the housing circumferential wall (56) and a radial edge (66) extending along the outlet front wall area (58), wherein in at least one heat transfer rib (26) the radial edge (66) has a first radial edge area (68) adjacent to the longitudinal edge (64) in the radially outward direction and a second radial edge area (70) adjacent to the first radial edge area (68) in the radially inward direction and essentially oriented at right angles to the housing longitudinal axis (L) and wherein a distance of the radial edge (66) from the outlet front wall area (58) changes from radially outwards to radially inwards in at least some areas, **characterized in that** in the at least one heat transfer rib (26) the distance of the radial edge (66) from the outlet front wall area (58) in the first radial edge area (68) increases at least in the section extending along the conically tapering area (60) of the outlet front wall area (58) in the flow direction and **in that** the longitudinal edge (64) has an essentially constant distance to the housing circumferential wall (56) in the direction of the housing longitudinal axis (L).

2. Vehicle heating device in accordance with claim 1, **characterized in that** in all heat transfer ribs (26) the distance of the radial edge (66) from the outlet front wall area (58) varies, preferably increases, from radially outwards to radially inwards in at least some areas.

3. Vehicle heating device in accordance with claim 1 or 2, **characterized in that** the conically tapering area (60) of the outlet front wall area (58) is adjacent to the housing circumferential wall (56) in the radially outward direction and is adjacent to a housing outlet section (62), providing an outlet opening (50) of the outlet area (51) and preferably being essentially cylindrical, in the radially inward direction.

4. Vehicle heating device in accordance with one of the preceding claims, **characterized in that** the radial edge (66) extends essentially linearly in the area with increasing distance to the outlet front wall area (58).

5. Vehicle heating device in accordance with one of the preceding claims, **characterized in that** the radial edge (66) has an angle in the range of 5° to 15°, and preferably about 10°, in relation to the outlet front wall area (58) in the area with increasing distance to the outlet front wall area (58).

6. Vehicle heating device in accordance with one of the preceding claims, **characterized in that** the second radial edge area (70) is located axially opposite the outlet area (51) in the direction of the housing longitudinal axis (L).

7. Vehicle heating device in accordance with one of the preceding claims, **characterized in that** the longitudinal edges (64) of all heat transfer ribs (26), have an essentially constant distance to the housing circumferential wall (56) in the direction of the housing longitudinal axis (L).

8. Vehicle heating device in accordance with one of the preceding claims, **characterized in that** the heat transfer ribs (26) extend essentially linearly in the direction of the housing longitudinal axis (L).

9. Vehicle heating device in accordance with one of the preceding claims, **characterized in that** the heat exchanger housing (12) has a circumferential wall area (14), which extends essentially in the direction of the housing longitudinal axis (L) and preferably has an essentially cylindrical shape, and a bottom wall area (18), which is adjacent to the circumferential wall area (14) and preferably has an essentially dome-like shape.

## Revendications

1. Dispositif de chauffage du véhicule, comprenant :
- un boîtier de dispositif de chauffage (46), dans lequel le boîtier de dispositif de chauffage (46) définit un espace d'écoulement d'air (47) pour l'air à chauffer et présente une zone d'entrée (49) pour l'entrée d'air dans l'espace d'écoulement d'air (47) et une zone de sortie (51) pour la sortie d'air de l'espace d'écoulement d'air (47),
- un module de chambre de brûleur (30) qui doit être alimentée en air de combustion et en combustible dans le boîtier de dispositif de chauffage (46),
- une zone d'échangeur de chaleur (11) avec un boîtier d'échangeur de chaleur (12), allongé dans la direction d'un axe longitudinal de boîtier (L) et autour duquel l'air circulant dans l'espace d'écoulement d'air (47) peut circuler sur un côté extérieur (24), dans lequel des ailettes de transfert de chaleur (26) sont prévues sur le côté extérieur (24) du boîtier d'échangeur de chaleur (12),
dans lequel le boîtier de dispositif de chauffage (46) comporte une paroi circonférentielle de boîtier (56) et une zone de paroi frontale de sortie (58) adjacente à la paroi circonférentielle de boîtier (56), dans lequel la paroi circonférentielle de boîtier (56) est, au moins dans une zone entourant le boîtier d'échangeur de chaleur, (12) formée essentiellement cylindrique et la zone de paroi frontale de sortie (58) est formée se rétrécissant de manière conique au moins par endroits dans lequel les nervures de transfert de chaleur (26) ont un bord longitudinal (64) s'étendant le long de la paroi circonférentielle de boîtier (56) et un bord radial (66) s'étendant le long de la zone de paroi frontale de sortie (58), dans lequel le bord radial (66) présente, dans au moins une nervure de transfert de chaleur (26), une première zone de bord radial (68) adjacente au bord longitudinal (64) dans le sens radial vers l'extérieur et une deuxième zone de bord radial (70) adjacente à la première zone de bord radial (68) dans le sens radial vers l'intérieur et orientée essentiellement à angle droit par rapport à l'axe longitudinal de boîtier (L) et dans lequel une distance du bord radial (66) par rapport à la zone de paroi frontale de sortie (58) varie de l'extérieur vers l'intérieur dans le sens radial au moins par endroits, **caractérisé en ce que** dans ladite au moins une nervure de transmission de chaleur (26), la distance du bord radial (66) par rapport à la zone de paroi frontale de sortie (58) dans la première zone de bord radial (68) augmente au moins dans la section s'étendant le long de la zone se rétrécissant de manière conique (60) de la zone de paroi frontale de sortie (58) dans la direction d'écoulement et **en ce que** le bord longitudinal (64) présente une distance sensiblement constante par rapport à la paroi circonférentielle de boîtier (56) dans la direction de l'axe longitudinal de boîtier (L).

2. Dispositif de chauffage de véhicule selon la revendication 1, **caractérisé en ce que** dans toutes les nervures de transfert de chaleur (26), la distance du bord radial (66) par rapport à la zone de paroi frontale de sortie (58) varie, de préférence augmente, de l'extérieur vers l'intérieur dans le sens radial, au moins par endroits.

3. Dispositif de chauffage pour véhicule selon la revendication 1 ou 2, **caractérisé en ce que** la zone se rétrécissant de manière conique (60) de la zone de paroi frontale de sortie (58) est adjacente à la paroi circonférentielle de boîtier (56) dans le sens radial vers l'extérieur et est adjacente à une section de sortie de boîtier (62), qui fournit une ouverture de sortie (50) de la zone de sortie (51) et qui est de préférence essentiellement cylindrique, dans le sens radial vers l'intérieur.

4. Dispositif de chauffage de véhicule selon l'une des revendications précédentes, **caractérisé en ce que** le bord radial (66) s'étend de manière essentiellement linéaire dans la zone à distance croissante de la zone de paroi frontale de sortie (58).

5. Dispositif de chauffage de véhicule selon l'une des revendications précédentes, **caractérisé en ce que** le bord radial (66) présente un angle dans la plage de 5° à 15°, et de préférence d'environ 10°, par rapport à la zone de paroi frontale de sortie (58) dans la zone où la distance à la zone de paroi frontale de sortie (58) augmente.

6. Dispositif de chauffage de véhicule selon l'une des revendications précédentes, **caractérisé en ce que** la deuxième zone de bord radiale (70) est située axialement à l'opposé de la zone de sortie (51) dans la direction de l'axe longitudinal de boîtier (L).

7. Dispositif de chauffage de véhicule selon l'une des revendications précédentes, **caractérisé en ce que** les bords longitudinaux (64) de toutes les nervures de transfert de chaleur (26) présentent une distance essentiellement constante par rapport à la paroi circonférentielle de boîtier (56) dans la direction de l'axe longitudinal de boîtier (L).

8. Dispositif de chauffage de véhicule selon l'une des revendications précédentes, **caractérisé en ce que** les nervures de transfert de chaleur (26) s'étendent de manière essentiellement linéaire dans la direction de l'axe longitudinal de boîtier (L).

9. Dispositif de chauffage de véhicule selon l'une des revendications précédentes, **caractérisé en ce que** le boîtier d'échangeur de chaleur (12) présente une zone de paroi périphérique (14) qui s'étend essentiellement dans la direction de l'axe longitudinal de boîtier (L) et présente de préférence une forme essentiellement cylindrique, et une zone de paroi de fond (18) qui est adjacente à la zone de paroi périphérique (14) et présente de préférence une forme essentiellement en dôme.
